# EUROPÄISCHE PATENTSCHRIFT

(11) **EP 1 531 639 B1**
(45) Veröffentlichungstag und Bekanntmachung des Hinweises auf die Patenterteilung: **19.07.2017**
(21) Anmeldenummer: 04026666.0
(22) Anmeldetag: 10.11.2004
(51) Int. Cl.: H04L 29/08, H04W 8/24

(54) **Verfahren zur Übertragung von Daten auf ein mobiles Endgerät in Mobilfunknetzen**
Method for transmitting data to a mobile terminal in mobile networks
Procédé pour transmettre des données vers un terminal mobile dans un réseau mobile

(30) Priorität: 12.11.2003 DE 10353117
(43) Veröffentlichungstag der Anmeldung: 18.05.2005
(73) Patentinhaber: Vodafone Holding GmbH, 40213 Düsseldorf (DE)
(72) Erfinder: Georg, Tobias, 40235 Düsseldorf (DE)
(74) Vertreter: Weisbrodt, Bernd

(56) Entgegenhaltungen:
- EP-A- 1 182 600
- WO-A-02/43414
- WO-A-02/058359
- WO-A2-99/65256
- US-A1- 2002 107 002
- US-A1- 2003 065 802
- US-B1- 6 243 739

## Beschreibung

Die vorliegende Erfindung betrifft ein Verfahren zur Übertragung von Daten von einer zur Übertragung vorgesehene Daten bereithaltenden Datenbank auf ein mobiles Endgerät in Mobilfunknetzen, wobei eine Verknüpfung zu Daten der Datenbank mittels eines Dienstes eines Mobilfunknetzes seitens des mobilen Endgerätes zur Auswahl angezeigt und bei Auswahl der angezeigten Verknüpfung seitens des mobilen Endgerätes entsprechend verknüpfte Daten von der Datenbank auf das mobile Endgerät übertragen werden. Ein derartiges Verfahren ist beispielsweise aus der US 2002/0183045 A1 bekannt.

Verfahren zur Übertragung von Text- sowie Ton- und/oder Bildinformationen umfassenden Daten von einer derartige Daten bereithaltenden Datenbank auf ein mobiles Endgerät in Mobilfunknetzen sind im Stand der Technik beispielsweise aus der US 2002/0183045 A1 oder der WO 01/76164 A1 bekannt und werden insbesondere im Rahmen der Übertragung von in der Regel für den Nutzer kostenpflichtigen Informationsdiensten, Spielen, Klingeltönen und/oder Logos für Mobilfunktelefone, oder dergleichen Dienste verwendet. Dabei kann der Nutzer entsprechende Dienste bei einem derartige Dienste im Mobilfunknetz anbietenden Betreiber, beispielsweise einem Mobilfunknetzbetreiber, abonniert haben und automatisch mittels eines Dienstes des Mobilfunknetzes, insbesondere eines Mitteilungsdienstes wie MMS (Multimedia-Mitteilungsdienst) oder SMS (Kurzmitteilungsdienst), von dem jeweiligen Dienstebetreiber bzw. -anbieter eine Verknüpfung zu entsprechenden Daten erhalten. Auch kann der Nutzer ohne Abonnement von dem jeweiligen Dienstebetreiber bzw. -anbieter eine Verknüpfung zu entsprechenden Daten erhalten, beispielsweise um diesen Nutzer als Kunden für entsprechende Dienste und mitunter neuen Dienste-Abonnenten zu gewinnen.

Insbesondere ist es bekannt, einem Nutzer bzw. Kunden eines Mobilfunknetzes bzw. Mobilfunknetzbetreibers mittels eines Multimedia-Mitteilungsdienstes eines Mobilfunknetzes - einer sogenannten "MMS" - auf dessen Mobilfunktelefon eine Verknüpfung - einen sogenannten "Link" - auf Ton- und/oder Bildinformationen umfassende Daten, insbesondere Audio- und/oder Videodaten, zu schicken. Dabei verweist die Verknüpfung auf Audio- und/oder Videodaten seitens einer sich im Mobilfunknetz befindenden Datenbank. Bei Auswahl der Verknüpfung durch entsprechende Aktivierungseingabe seitens des Mobilfunktelefons durch den Nutzer bzw. Kunden, beispielsweise durch Betätigung von Tasten, Spracheingabe oder dergleichen seitens des Mobilfunktelefons, werden die entsprechend verknüpften Audio- und/oder Videodaten von der Datenbank auf das Mobilfunktelefon übertragen - sogenanntes "Download" - und von diesem über dessen Lautsprecher und/oder Display zur Anzeige gebracht, das heißt wiedergegeben oder abgespielt.

Ferner offenbart die US 2003/0065802 A1 ein Verfahren, bei dem aus multimedialen Inhalt umfassenden Daten Auszüge des Inhalts unter Verwendung von Parametersets dynamisch erstellt und dem Nutzer eines mobilen Endgerätes im Sinne einer Vorschau zur Verfügung gestellt werden. Der Nutzer kann bei Interesse an dem multimedialen Inhalt den gesamten Inhalt auf sein mobiles Endgerät herunterladen.

Weiterhin offenbart die US 6,243,739 B1 ein Verfahren zum Umgang mit von einem Server an einen angebundenen Rechner übertragenen und an einen Nutzer gerichteten Informationen, wie E-Mails. Die zusammen mit einer Information bezüglich des Nutzers von dem Rechner empfangenen E-Mails werden gespeichert und es werden Nachrichteneinheiten erzeugt, wobei jede Einheit zumindest einen Teil des Inhalts einer empfangenen E-Mail, beispielsweise die ersten 100 Zeichen, aufweist. Diese erzeugten Nachrichteneinheiten werden an ein mobiles Endgerät des Nutzers gesendet. Daran anschließend wird eine Benachrichtigung an das mobile Endgerät gesendet, die den Nutzer über das Vorliegen von E-Mails unterrichtet. Durch das vorherige Versenden der Nachrichteneinheiten kann der Nutzer nach Erhalt der Benachrichtigung einsehen, was für E-Mails er erhalten hat, und auf Wunsch das Zusenden der vollständigen E-Mails anfordern.

Die im Mobilfunknetz zur Übertragung von Daten zur Verfügung stehende Bandbreite ist relativ gering und unterliegt insbesondere in Abhängigkeit der lokalen Auslastung des Mobilfunknetzes starken Schwankungen. Bei der Übertragung Audio- und/oder Videodaten, insbesondere einem sogenannten Audio- und/oder Video-Streaming, bei welchem kontinuierlich in großen Datenmengen in der Regel hinsichtlich ihrer zeitlichen Reihenfolge geordnet zusammengehörende Audio- und/oder Videodaten übertragen werden, beispielsweise für sogenannte Videoclips, sind die im Mobilfunknetz gegebenen Beschränkungen und Schwankungen der für die Übertragung von Daten zur Verfügung stehenden Bandbreite äußerst nachteilig. Aufgrund der im Mobilfunknetz gegebenen Beschränkungen und Schwankungen der für die Übertragung von Daten zur Verfügung stehenden Bandbreite vergeht in Abhängigkeit der zu übertragenden Datenmenge eine gewisse Zeit, bis die ersten Datenteile nach Auswahl der Verknüpfung zu den Daten durch den Nutzer auf das mobile Endgerät des Nutzers übertragen und anzeigbar sind. Es ist bekannt, einen Teil der Daten Zwischenzupuffern und auftretende Übertragungsengpässe aus diesem sogenannten "Buffer" zu kompensieren, damit sich Schwankungen in der Bandbreite nicht nachteilig auf die Wiedergabequalität der Daten auswirken. Augrund dieser "Wartezeit" - die benötigt wird, um die Verbindung aufzubauen und die Pufferdaten zu laden - gewinnt der Nutzer den Eindruck, dass die Mobilfunkverbindung und/oder der ausgewählte Dienst zu langsam, veraltet und kostenintensiv ist. Dies führt mitunter dazu, dass der Nutzer bzw. Kunde entsprechende Dienste nicht oder nur selten nutzt bzw. nutzen wird.

Der Erfindung liegt in Anbetracht dieses Standes der Technik die **Aufgabe** zugrunde, ein Verfahren der eingangs genannten Art bereitzustellen, welches unter Meidung der beschriebenen Nachteile eine verbesserte Übertragung von Daten auf ein mobiles Endgerät in Mobilfunknetzen ermöglicht, insbesondere derart, dass nutzer- bzw. kundenseitig ausgewählte Daten weitestgehend verzögerungsfrei bestimmungsgemäß nutzbar sind und zumindest subjektiv eine Datenübertragung mit hoher Datenübertragungsrate gegeben ist.

Zur technischen **Lösung** dieser Aufgabe wird erfindungsgemäß vorgeschlagen, dass mit der seitens des mobilen Endgerätes auswählbaren Verknüpfung zu Daten der Datenbank zumindest ein Teil der mit der Verknüpfung verknüpften Daten auf das mobile Endgerät übertragen wird, der Teil der mit der Verknüpfung zu Daten der Datenbank übertragenen Daten seitens des mobilen Endgerätes bei Auswahl der Verknüpfung seitens des mobilen Endgerätes zur Anzeige gebracht wird und bei Auswahl der Verknüpfung seitens des mobilen Endgerätes die verbleibenden, entsprechend der Verknüpfung ausgewählten Daten kontinuierlich von der Datenbank auf das mobile Endgerät übertragen werden.

Der Erfindung liegt die Erkenntnis zugrunde, dass bereits mit der mittels eines Dienstes des Mobilfunknetzes seitens des mobilen Endgerätes zur Auswahl angezeigten Verknüpfung zu Daten der Datenbank bereits ein Teil der mit der Verknüpfung verknüpften Daten auf das mobile Endgerät übertragbar ist, insbesondere da die Verknüpfung die von entsprechenden Diensten eines Mobilfunknetzes für Nutzdaten zur Verfügung gestellte Datenkapazität nicht vollständig ausnutzt.

Da der Teil der mit der Verknüpfung zu Daten der Datenbank übertragenen Daten seitens des mobilen Endgerätes bei Auswahl der Verknüpfung seitens des mobilen Endgerätes zur Anzeige bringbar ist, wird der Teil der mit der Verknüpfung zu Daten der Datenbank übertragenen Daten seitens des mobilen Endgerätes eines Nutzers bzw. Kundens nutzbar und kann so beispielsweise vorteilhaft dazu genutzt werden, den Nutzer bzw. Kunden zur Auswahl der Verknüpfung und damit zum Erwerb der verbleibenden, entsprechend der Verknüpfung ausgewählten Daten zu motivieren. Die Aktivierungseingabe erfolgt dabei durch die Auswahl der Verknüpfung, welche vorteilhafterweise ebenfalls durch eine Aktivierungseingabe seitens des mobilen Endgerätes erfolgt.

Bei Auswahl der Verknüpfung seitens des mobilen Endgerätes werden die verbleibenden, entsprechend der Verknüpfung ausgewählten Daten kontinuierlich von der Datenbank auf das mobile Endgerät übertragen.

Vorteilhafterweise wird der Teil der mit der Verknüpfung zu Daten der Datenbank übertragenen Daten seitens des mobilen Endgerätes bei Aktivierungseingabe seitens des mobilen Endgerätes zur Anzeige gebracht.

Vorteilhafterweise sind die verbleibenden, entsprechend der Verknüpfung ausgewählten Daten seitens des mobilen Endgerätes zur Anzeige bringbar. Gemäß einer weiteren vorteilhaften Ausgestaltung der Erfindung sind die verbleibenden, entsprechend der Verknüpfung ausgewählten Daten im Anschluss an den Teil der mit der Verknüpfung zu Daten der Datenbank übertragenen Daten seitens des mobilen Endgerätes zur Anzeige bringbar.

In einer bevorzugten Ausgestaltung der Erfindung werden während der Anzeige des Teils der mit der Verknüpfung zu Daten der Datenbank übertragenen Daten die verbleibenden, entsprechend der Verknüpfung ausgewählten Daten kontinuierlich von der Datenbank auf das mobile Endgerät übertragen und seitens des mobilen Endgerätes kontinuierlich zur Anzeige gebracht. Durch diese Ausgestaltung der Erfindung wird bei dem Kunden der Eindruck einer modernen und schnellen Datenübertragung mit hoher Datenübertragungsrate erzeugt, insbesondere da die Übertragung der verbleibenden, entsprechend der Verknüpfung ausgewählten Daten für den Nutzer bzw. Kunden quasi unbemerkt kontinuierlich während der kontinuierlichen Anzeige der Daten erfolgt.

Gemäß einer weiteren vorteilhaften Ausgestaltung der Erfindung wird der Teil der mit der Verknüpfung zu Daten der Datenbank übertragenen Daten seitens des mobilen Endgerätes in wenigstens einem dafür vorgesehenen Speicher gepuffert. In einer weiteren vorteilhaften Ausgestaltung der Erfindung werden die verbleibenden entsprechend der Verknüpfung ausgewählten und kontinuierlich von der Datenbank auf das mobile Endgerät übertragenen Daten in wenigstens einem Speicher gepuffert. Durch das erfindungsgemäße Zwischenspeichern - dem sogenannten Puffern - der Daten in einem Speicher oder mehreren Speichern ist auf einfache Art und Weise für den Nutzer bzw. Kunden der subjektive Eindruck einer schnellen Datenübertragung mit hoher Datenübertragungsrate erzeugbar.

Vorteilhafter werden, insbesondere zur Verstärkung dieses nutzer- bzw. kundenseitigen subjektiven Eindrucks, die in dem Speicher gepufferten Daten zur Anzeige gebracht. Gemäß einer weiteren Ausgestaltung der Erfindung ist die Größe des Puffer-Speichers einstellbar. Dadurch ist vorteilhafterweise eine Anpassung an die Daten vornehmbar, beispielsweise durch Einstellung der Puffer-Speichergröße in einem Auswahlmenü seitens des mobilen Endgerätes. In einer bevorzugten Ausgestaltung der Erfindung ist die Größe des Puffer-Speichers an die zu übertragenden Daten und/oder an die zu übertragende Datenmenge anpassbar. Vorteilhafterweise erfolgt die Anpassung der Größe des Puffer-Speichers dabei automatisch. Durch eine an die zu übertragenden Daten und/oder an die zu übertragende Datenmenge anpassbare Größe des Pufferspeichers sind so beispielsweise unterschiedliche Qualitäten von Daten eines Audio- und/oder Video-Streams anzeigbar, insbesondere hinsichtlich unterschiedlicher Bildauflösungen bei Videodaten oder sogenannten Samplingraten bei Audiodaten. Durch eine automatische Anpassung der Größe des Puffer-Speichers ist insbesondere die Handhabbarkeit seitens des Nutzers vereinfacht.

Die Daten werden vorteilhafterweise seitens des mobilen Endgerätes akustisch und/oder optisch zur Anzeige gebracht, wobei bevorzugt kontinuierlich Audio- und/oder Videodaten in großen Datenmengen übertragen und seitens des mobilen Endgerätes zur Anzeige gebracht werden, sogenanntes Audio- und/oder Video-Streaming.

In einer weiteren Ausgestaltung der Erfindung werden Daten ereignisgesteuerter Inhalte zur Anzeige gebracht, das heißt Inhalte, die auf Aktionen beruhen die durch Ereignisse ausgelöst werden, beispielsweise für den Verlauf und/oder den Ausgang von Spielen, insbesondere Fußballspiele oder dergleichen, und/oder Entscheidungen oder dergleichen Ereignisse, insbesondere tagesaktuelle Ereignisse, relevante Audio- und/ oder Video-Ausschnitte. So können insbesondere Sportereignisse, wie Tore eines Fußballspiels oder der Start bzw. Zieleinlauf oder dergleichen eines Rennens, als auswählbare Daten angeboten werden.

In einer bevorzugten Ausgestaltung der Erfindung ist der Dienst des Mobilfunknetzes ein Multimedia-Mitteilungsdienst (MMS).

Vorteilhafterweise ist die Datenbank von einem Streaming-Server bereitgestellt, der vorteilhafterweise direkt oder über ein Festnetz an ein Mobilfunknetz angeschlossen und in diesem integriert ist. Ferner kann erfindungsgemäß vorgesehen sein, dass der Teil der mit der Verknüpfung zu Daten der Datenbank übertragenen Daten sich in einer ersten Datenbank, und die verbleibenden, entsprechend der Verknüpfung auswählbaren und verknüpften Daten in einer weiteren Datenbank befinden.

Vorteilhafterweise ist das mobile Endgerät ein Multimedia-Mitteilungsdienst-fähiges (MMS-fähiges) Mobilfunktelefon. Vorteilhafterweise ist das mobile Endgerät ein streaming-fähiges Mobilfunktelefon.

In einer weiteren bevorzugten Ausgestaltung der Erfindung sind die zur Anzeige bringbaren Daten seitens des mobilen Endgerätes speicherbar. So können entsprechend seitens des mobilen Endgerätes gespeicherte Daten vorteilhafterweise beliebig oft seitens des mobilen Endgerätes zur Anzeige gebracht werden, ohne dass diese jedes mal bzw. immer wieder erneut von einer Datenbank auf das mobile Endgerät übertragen werden müssen.

In einer weiteren Ausgestaltung der Erfindung sind die verbleibenden, entsprechend der Verknüpfung auswählbaren Daten nur zeitlich begrenzt über die Verknüpfung auswählbar, das heißt, das nach einer gewissen, vorgebbaren zeitlichen Dauer die Verknüpfung zu Daten der Datenbank ihre Funktionalität dadurch verliert, dass entsprechend der Verknüpfung keine verknüpften Daten seitens der Datenbank zugeordnet sind. Dadurch ist quasi eine Mindesthaltbarkeit" der Verknüpfung vorgebbar, was insbesondere bei kurzfristigen und tagesaktuellen Daten ereignisgesteuerter Inhalte vorteilhaft ist.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: in einer schematischen Prinzipdarstellung ein Verfahren zur Übertragung von Daten auf ein mobiles Endgerät in Mobilfunknetzen gemäß dem Stand der Technik und
- Fig. 2: in einer schematischen Prinzipdarstellung ein Ausführungsbeispiel eines erfindungsgemäßen Verfahrens zur Übertragung von Daten auf ein mobiles Endgerät in Mobilfunknetzen.

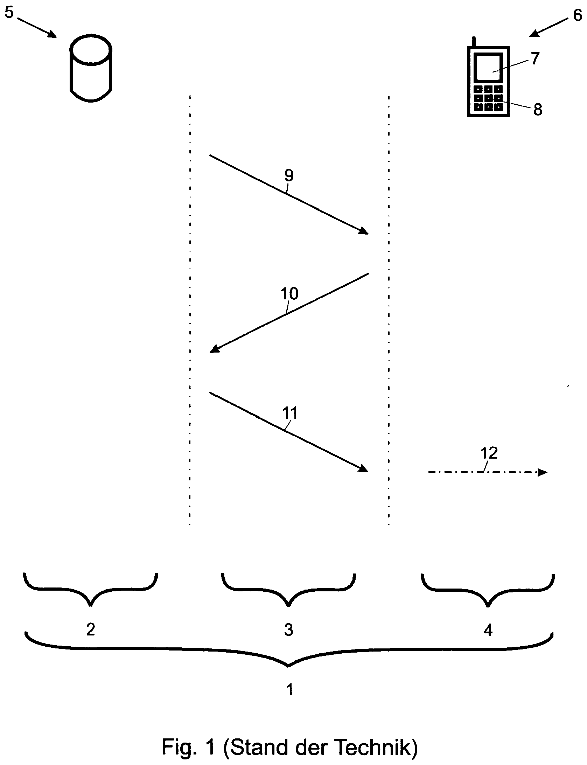

Fig. 1 zeigt den prinzipiellen Ablauf eines im Stand der Technik bekannten Verfahrens zur Übertragung von Daten 12 von einer zur Übertragung vorgesehene Daten 12 bereithaltenden Datenbank 5 auf ein mobiles Endgerät 6, vorliegend ein Mobilfunktelefon, in Mobilfunknetzen 1. In Fig. 1 ist das Mobilfunknetz 1 aufgeteilt in eine eine Datenbank 5 unterhaltende und pflegende Betreiberseite 2, den Übertragungskanal 3 und die das mobile Endgerät 6 verwendende Nutzerseite 4. Die Datenbank 5 und das mobile Endgerät 6 sind dabei vorliegend nur symbolisch für die Betreiberseite 2 und die Nutzerseite 4 des Mobilfunknetzes 1 dargestellt. Insbesondere stellt die mit 5 gekennzeichnete Datenbank vorliegend mehrere im Mobilfunknetz 1 vorhandene Datenbanken dar. Weitere, insbesondere betreiber- und übertragungskanalseitig vorhandene Komponenten des Mobilfunknetzes 1 sind hier aus Gründen der Übersichtlichkeit nicht dargestellt.

Mittels eines Dienstes des Mobilfunknetzes 1, beispielsweise mittels einer sogenannten SMS, wird eine Verknüpfung 9 zu Daten 12 der Datenbank 5 auf das mobile Endgerät 6 übertragen und zur Auswahl angezeigt. Bei Auswahl 10 der angezeigten Verknüpfung 9 seitens des mobilen Endgerätes 6 durch eine Aktivierungseingabe über die als Eingabeeinrichtung dienende Tastatur 8 des mobilen Endgerätes 6 werden entsprechend verknüpfte Daten 12 von der die zur Übertragung vorgesehenen Daten bereithaltenden Datenbank 5 auf das mobile Endgerät 6 übertragen. In Fig. 1 ist diese Übertragung der verknüpften Datenbank-Daten 12 durch den mit dem Bezugszeichen 11 gekennzeichneten Pfeil dargestellt. Die auf das mobile Endgerät 6 übertragenen Daten 12 werden dann auf dem als Anzeigeeinrichtung dienenden Display 7 des mobilen Endgeräts 6 zur Anzeige gebracht, wie in Fig. 1 mit dem mit dem Bezugszeichen 12 gekennzeichneten strichpunktierten Pfeil dargestellt.

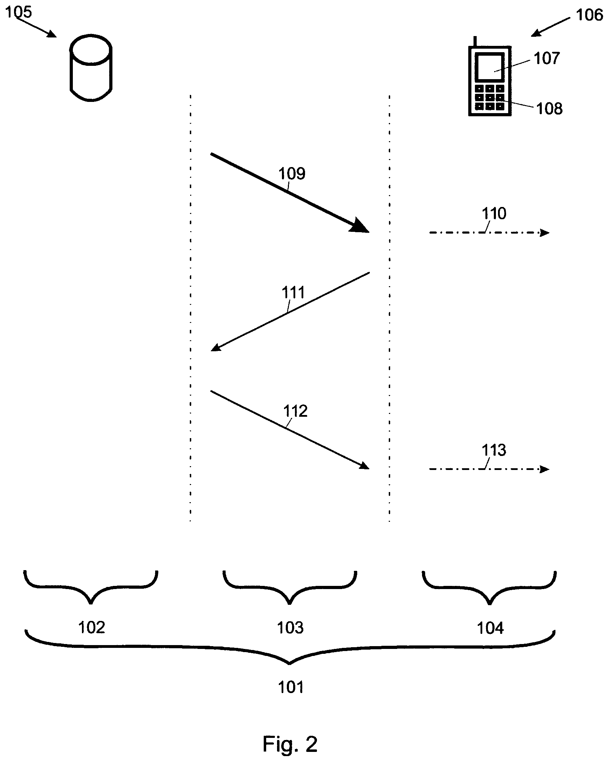

Fig. 2 zeigt den prinzipiellen Ablauf eines Ausführungsbeispiels eines erfindungsgemäßen Verfahrens zur Übertragung von Daten 110, 113, vorliegend kontinuierliche Videodaten in großen Datenmengen (Video-Stream), von einer zur Übertragung vorgesehene Daten 110, 113 bereithaltenden Datenbank 105 auf ein mobiles Endgerät 106, vorliegend ein MMS-fähiges Mobilfunktelefon, in Mobilfunknetzen 101. Entsprechend der Darstellung in Fig. 1 ist in Fig. 2 das Mobilfunknetz 101 aufgeteilt in eine eine Datenbank 105 unterhaltende und pflegende Betreiberseite 102, den Übertragungskanal 103 und die das mobile Endgerät 106 verwendende Nutzerseite 104. Die Datenbank 105 und das mobile Endgerät 106 sind dabei vorliegend nur symbolisch für die Betreiberseite 102 und die Nutzerseite 104 des Mobilfunknetzes 101 dargestellt. Wie in Fig. 1 stellt die mit 105 gekennzeichnete Datenbank vorliegend mehrere im Mobilfunknetz 101 vorhandene Datenbanken dar. Weitere, insbesondere betreiber- und übertragungskanalseitig vorhandene Komponenten des Mobilfunknetzes 101 sind hier aus Gründen der Übersichtlichkeit nicht dargestellt.

Bei dem in Fig. 2 dargestellten Verfahren zur Übertragung von Daten wird Mittels eines Dienstes des Mobilfunknetzes 101, vorliegend mittels einer sogenannten MMS, eine Verknüpfung 109 zu Daten 113 der Datenbank 105 auf das mobilen Endgerät 6 übertragen und zur Auswahl angezeigt. Mit der seitens des mobilen Endgerätes 106 auswählbaren Verknüpfung 109 zu Daten 113 der Datenbank 105 wird ein Teil 110 der mit der Verknüpfung 109 verknüpften Daten 113 auf das mobile Endgerät 106 übertragen und in einem Puffer-Speicher seitens des mobilen Endgerätes gespeichert. Der Teil 110 der mit der Verknüpfung 109 zu Daten 113 der Datenbank 105 übertragenen Daten ist seitens des als Anzeigeeinrichtung dienenden Displays 107 des mobilen Endgeräts 106 bei entsprechender Aktivierungseingabe über die als Eingabeeinrichtung dienende Tastatur 108 des mobilen Endgerätes 106 anzeigbar und dient insbesondere dazu den Nutzer des mobilen Endgerätes 106 zur Auswahl 111 der Verknüpfung 109 und damit zum Erwerb der verbleibenden, entsprechend der Verknüpfung109 auswählbaren Daten 113 zu motivieren.

Bei Auswahl 111 der angezeigten Verknüpfung 109 seitens des mobilen Endgerätes 106 durch eine Aktivierungseingabe über die als Eingabeeinrichtung dienende Tastatur 108 des mobilen Endgerätes 106 werden entsprechend verknüpfte Daten 113 von der die zur Übertragung vorgesehenen Daten bereithaltenden Datenbank 105 auf das mobile Endgerät 106 übertragen. In Fig. 2 ist diese Übertragung der verknüpften Datenbank-Daten 113 durch den mit dem Bezugszeichen 112 gekennzeichneten Pfeil dargestellt.

Vorliegend wird bei Auswahl 111 der angezeigten Verknüpfung 109 seitens des mobilen Endgerätes 106 der Teil 110 der mit der Verknüpfung 109 zu Daten 113 der Datenbank 105 übertragenen Daten seitens des Displays 107 des mobilen Endgerätes zur Anzeige gebracht, und werden während der Anzeige des Teils 110 der mit der Verknüpfung 109 zu Daten 113 der Datenbank 105 übertragenen Daten die verbleibenden, entsprechend der Verknüpfung 109 ausgewählten Daten 113 kontinuierlich von der Datenbank 105 auf das mobile Endgerät 106 übertragen und seitens des Displays 107 des mobilen Endgerätes 106 im Anschluss an den Teil 110 der mit der Verknüpfung 109 zu Daten 113 der Datenbank 105 übertragenen Daten kontinuierlich zur Anzeige gebracht, wie in Fig. 2 mit dem mit dem Bezugszeichen 113 gekennzeichneten strichpunktierten Pfeil dargestellt.

Das in Fig. 2 prinzipiell dargestellte Verfahren ermöglicht so verbesserte Übertragung von Daten 110, 113 auf ein mobiles Endgerät 106 in Mobilfunknetzen 101. Auf der Nutzerseite 104 des Mobilfunknetzes 101 sind so ausgewählte bzw. auswählbare Daten 113 verzögerungsfrei entsprechend ihrer Bestimmung nutzbar. Ferner ist auf der Nutzerseite 104 des Mobilfunknetzes 101 subjektiv eine Datenübertragung mit hoher Datenübertragungsrate gegeben, die dazu geeignet ist, den Nutzer zur Nutzung des angebotenen Dienstes anzuhalten.

Die in den Figuren dargestellten Ausführungsbeispiele dienen lediglich der Erläuterung der Erfindung und sind für diese nicht beschränkend.

### Bezugszeichenliste

- 1, 101: Mobilfunknetz
- 2, 102: Betreiberseite Mobilfunknetz
- 3, 103: Übertragungskanal Mobilfunknetz
- 4, 104: Nutzerseite Mobilfunknetz
- 5, 105: Datenbank im Mobilfunknetz
- 6, 106: mobiles Endgerät/Mobilfunktelefon
- 7, 107: Anzeigeeinrichtung/Display (mobiles Endgerät (6))
- 8, 108: Eingabeeinrichtung/Tastatur (mobiles Endgerät (6))
- 9: Übertragung Verknüpfung
- 10, 111: Auswahl Verknüpfung
- 11: Übertragung Datenbank-Daten
- 12: Anzeige Datenbank-Daten
- 109: Übertragung Verknüpfung und Teil Datenbank-Daten
- 110: Anzeige Teil Datenbank-Daten
- 112: Übertragung verbleibende Datenbank-Daten
- 113: Anzeige Teil und/oder verbleibende Datenbank-Daten

## Patentansprüche

1. Verfahren zur Übertragung von Daten (12, 113) von einer zur Übertragung vorgesehene Daten (12, 113) bereithaltenden Datenbank (5, 105) auf ein mobiles Endgerät (6, 106) in Mobilfunknetzen (1, 101), wobei eine Verknüpfung (9, 109) zu Daten (12, 113) der Datenbank (5, 105) mittels eines Dienstes eines Mobilfunknetzes (1, 101) seitens des mobilen Endgerätes (6, 106) zur Auswahl angezeigt und bei Auswahl (10, 111) der angezeigten Verknüpfung (9, 109) seitens des mobilen Endgerätes (6, 106) entsprechend verknüpfte Daten (12, 113) von der Datenbank (5, 105) auf das mobile Endgerät (6, 106) übertragen werden,
**dadurch gekennzeichnet, dass**
mit der seitens des mobilen Endgerätes (106) auswählbaren Verknüpfung (109) zu Daten (113) der Datenbank (105) zumindest ein Teil (110) der mit der Verknüpfung (109) verknüpften Daten (113) auf das mobile Endgerät (106) übertragen wird, der Teil (110) der mit der Verknüpfung (109) zu Daten (113) der Datenbank (105) übertragenen Daten seitens des mobilen Endgerätes (106) bei Auswahl (111) der Verknüpfung (109) seitens des mobilen Endgerätes (106) zur Anzeige gebracht wird und bei Auswahl (111) der Verknüpfung (111) seitens des mobilen Endgerätes (106) die verbleibenden, entsprechend der Verknüpfung (109) ausgewählten Daten (113) kontinuierlich von der Datenbank (105) auf das mobile Endgerät (106) übertragen werden.

2. Verfahren nach Anspruch 1, **dadurch gekennzeichnet, dass** der Teil (110) der mit der Verknüpfung (109) zu Daten (113) der Datenbank (105) übertragenen Daten seitens des mobilen Endgerätes (106) bei Aktivierungseingabe seitens des mobilen Endgerätes (106) zur Anzeige gebracht wird.

3. Verfahren nach Anspruch 1 oder Anspruch 2, **dadurch gekennzeichnet, dass** die verbleibenden, entsprechend der Verknüpfung (109) ausgewählten Daten (113) seitens des mobilen Endgerätes (106) zur Anzeige bringbar sind.

4. Verfahren nach einem der Ansprüche 1 bis 3, **dadurch gekennzeichnet, dass** die verbleibenden, entsprechend der Verknüpfung (109) ausgewählten Daten (113) im Anschluss an den Teil (110) der mit der Verknüpfung (109) zu Daten (113) der Datenbank (105) übertragenen Daten seitens des mobilen Endgerätes (106) zur Anzeige bringbar sind.

5. Verfahren nach einem der Ansprüche 1 bis 4, **dadurch gekennzeichnet, dass** während der Anzeige des Teils (110) der mit der Verknüpfung (109) zu Daten (113) der Datenbank (105) übertragenen Daten die verbleibenden, entsprechend der Verknüpfung (109) ausgewählten Daten (113) kontinuierlich von der Datenbank (105) auf das mobile Endgerät (106) übertragen und seitens des mobilen Endgerätes (106) kontinuierlich zur Anzeige gebracht werden.

6. Verfahren nach einem der Ansprüche 1 bis 5, **dadurch gekennzeichnet, dass** der Teil (110) der mit der Verknüpfung zu Daten (113) der Datenbank (105) übertragenen Daten seitens des mobilen Endgerätes (106) in wenigstens einem dafür vorgesehenen Speicher gepuffert wird.

7. Verfahren nach einem der Ansprüche 1 bis 6, **dadurch gekennzeichnet, dass** die verbleibenden entsprechend der Verknüpfung (109) ausgewählten und kontinuierlich von der Datenbank (105) auf das mobile Endgerät (106) übertragenen Daten (113) in wenigstens einem Speicher gepuffert werden.

8. Verfahren nach Anspruch 6 oder Anspruch 7, **dadurch gekennzeichnet, dass** die in dem Speicher gepufferten Daten (110, 113) zur Anzeige gebracht werden.

9. Verfahren nach einem der Ansprüche 6 bis 8, **gekennzeichnet durch** eine einstellbare Größe des Puffer-Speichers.

10. Verfahren nach einem der Ansprüche 6 bis 9, **gekennzeichnet durch** eine an die zu übertragenden Daten (110, 113) und/oder an die zu übertragende Datenmenge anpassbare Größe des Puffer-Speichers.

11. Verfahren nach Anspruch 10, **gekennzeichnet durch** eine automatische Anpassung der Größe des Puffer-Speichers.

12. Verfahren nach einem der Ansprüche 1 bis 11, **dadurch gekennzeichnet, dass** die Daten (110, 113) seitens des mobilen Endgerätes (106) akustisch und/oder optisch zur Anzeige gebracht werden.

13. Verfahren nach einem der Ansprüche 1 bis 12, **dadurch gekennzeichnet, dass** kontinuierlich Audio- und/oder Videodaten in großen Datenmengen übertragen und seitens des mobilen Endgerätes (106) zur Anzeige gebracht werden (Audio- und/oder Video-Streaming).

14. Verfahren nach einem der Ansprüche 1 bis 13, **dadurch gekennzeichnet, dass** die Daten (110, 113) Daten ereignisgesteuerter Inhalte sind.

15. Verfahren nach einem der Ansprüche 1 bis 14, **dadurch gekennzeichnet, dass** der Dienst des Mobilfunknetzes (101) ein Multimedia-Mitteilungsdienst (MMS) ist.

16. Verfahren nach einem der Ansprüche 1 bis 15, **dadurch gekennzeichnet, dass** die Datenbank (105) von einem Streaming-Server bereitgestellt ist.

17. Verfahren nach Anspruch 16, **dadurch gekennzeichnet, dass** die Multimedia-Mitteilungsdienst-Bedienstation (MMS-Server) direkt oder über ein Festnetz an ein Mobilfunknetz (101) angeschlossen und in diesem integriert ist.

18. Verfahren nach einem der Ansprüche 1 bis 17, **dadurch gekennzeichnet dass** das mobile Endgerät (106) ein Multimedia-Mitteilungsdienst-fähiges (MMS-fähiges) Mobilfunktelefon ist.

19. Verfahren nach einem der Ansprüche 1 bis 18, **dadurch gekennzeichnet dass** das mobile Endgerät (106) ein streaming-fähiges Mobilfunktelefon ist.

20. Verfahren nach einem der Ansprüche 1 bis 19, **dadurch gekennzeichnet, dass** die zur Anzeige bringbaren Daten (110, 113) seitens des mobilen Endgerätes (106) speicherbar sind.

## Claims

1. A method for transmitting data (12, 113) from a database (5, 105), which keeps data (12, 113) provided for the transmission ready, to a mobile terminal (6, 106) in mobile radio networks (1, 101), wherein a linkage (9, 109) to data (12, 113) of the database (5, 105) by means of a service of a mobile radio network (1, 101) will be displayed for selection by the mobile terminal (6, 106) and if the displayed linkage (9, 109) is selected by means of the mobile terminal (6, 106), correspondingly linked data (12, 113) will be transmitted from the database (5, 105) to the mobile terminal (6, 106),
**characterized in that**
together with the linkage (109) to data (113) of the database (105), which linkage is selectable by the mobile terminal (106), at least a part (110) of the data (113) linked with the linkage (109) will be transmitted to the mobile terminal (106), the part (110) of the data transmitted with the linkage (109) to data (113) of the database (105) will be displayed by the mobile terminal (106), if the linkage (109) is selected (111) by means of the mobile terminal (106), and if the linkage (109) is selected (111) by means of the mobile terminal (106), the remaining data (113) which have been selected according to the linkage (109) will be continuously transmitted from the database (105) to the mobile terminal (106).

2. A method according to claim 1, **characterized in that** the part (110) of the data transmitted with the linkage (109) to data (113) of the database (105) will be displayed by means of the mobile terminal (106) in case of an activation input by the mobile terminal (106).

3. A method according to claim 1 or claim 2, **characterized in that** the remaining data (113) selected according to the linkage (109) can be displayed by means of the mobile terminal (106).

4. A method according to one of the claims 1 to 3, **characterized in that** the remaining data (113) selected according to the linkage (109) can be displayed by means of the mobile terminal (106) after the part (110) of the data transmitted with the linkage (109) to data (113) of the database (105) has been displayed.

5. A method according to one of the claims 1 to 4, **characterized in that** during the display of the part (110) of the data transmitted with the linkage (109) to data (113) of the database (105) the remaining data (113) selected according to the linkage (109) will be continuously transmitted from the database (105) to the mobile terminal (106) and continuously displayed by means of the mobile terminal (106).

6. A method according to one of the claims 1 to 5, **characterized in that** the part (110) of the data transmitted with the linkage (109) to data (113) of the database (105) will be buffered by means of the mobile terminal (106) in at least one memory provided for this.

7. A method according to one of the claims 1 through 6, **characterized in that** the remaining data (113) selected according to the linkage (109) and continuously transmitted from the database (105) to the mobile terminal (106) will be buffered in at least one memory.

8. A method according to claim 6 or claim 7, **characterized in that** the data (110, 113) buffered in the memory will be displayed.

9. A method according to one of the claims 6 to 8, **characterized by** a settable size of the buffer memory.

10. A method according to one of the claims 6 to 9, **characterized by** a size of the buffer memory, which size can be adapted to the data (110, 113) to be transmitted and/or to the volume of data to be transmitted.

11. A method according to claim 10, **characterized by** an automatic adaptation of the size of the buffer memory.

12. A method according to one of the claims 1 to 11, **characterized in that** the data (110, 113) will be acoustically and/or optically displayed by means of the mobile terminal (106).

13. A method according to one of the claims 1 to 12, **characterized in that** great amounts of audio and/or video data will be continuously transmitted and displayed by means of the mobile terminal (106) (audio and/or video streaming).

14. A method according to one of the claims 1 to 13, **characterized in that** the data (110, 113) are data of event-controlled contents.

15. A method according to one of the claims 1 to 14, **characterized in that** the service of the mobile radio network (101) is a multimedia message service (MMS).

16. A method according to one of the claims 1 to 15, **characterized in that** the database (105) is provided by a streaming server.

17. A method according to claim 16, **characterized in that** the multimedia message service control station (MMS server) is directly or via a fixed network connected to a mobile radio network (101) and is integrated in this one.

18. A method according to one of the claims 1 to 17, **characterized in that** the mobile terminal (106) is a mobile phone which is capable of a multimedia message service (capable of MMS).

19. A method according to one of the claims 1 to 18, **characterized in that** the mobile terminal (106) is a mobile phone which is capable of streaming.

20. A method according to one of the claims 1 to 19, **characterized in that** the data (110, 113) which can be displayed can be stored by means of the mobile terminal (106).

## Revendications

1. Procédé de transmission de données (12, 113) d'une base de données (5, 105), qui comprend des données (12, 113) prévues pour la transmission, à un terminal mobile (6, 106) dans des réseaux radio mobiles (1, 101), une liaison (9, 109) aux données (12, 113) de la base de données (5, 105) par moyen d'un service d'un réseau radio mobile (1, 101) étant affichée pour une sélection par le terminal mobile (6, 106) et si la liaison (9, 109) affichée est sélectionnée (10, 111) par le terminal mobile (6, 106), des données liées (12, 113) de manière correspondante seront transmises à partir de la base de données (5, 105) au terminal mobile (6, 106),
**caractérisé en ce qu'**
ensemble avec la liaison (109) à des données (113) de la base de données (105), laquelle liaison peut être sélectionnée par le terminal mobile (106), au moins une partie (110) des données (113) liées à la liaison (109) sera transmise au terminal mobile (106), la partie (110) des données transmises avec la liaison (109) à des données (113) de la base de données (105) sera affichée par le terminal mobile (106), si la liaison (109) est sélectionnée (111) par le terminal mobile (106), et si la liaison (109) est sélectionnée (111) par moyen du terminal mobile (106), les données restantes (113) sélectionnées selon la liaison (109) seront transmises de manière continue de la base de données (105) au terminal mobile (106).

2. Procédé selon la revendication 1, **caractérisé en ce que** la partie (110) des données transmises avec la liaison (109) à des données (113) de la base de données (105) sera affichée par moyen du terminal mobile (106) dans le cas d'une entrée d'activation par le terminal mobile (106).

3. Procédé selon la revendication 1 ou la revendication 2, **caractérisé en ce que** les données restantes (113) sélectionnées selon la liaison (109) peuvent être affichées par moyen du terminal mobile (106).

4. Procédé selon l'une des revendications 1 à 3, **caractérisé en ce que** les données restantes (113) sélectionnées selon la liaison (109) peuvent être affichées par moyen du terminal mobile (106) après que la partie (110) des données transmises avec la liaison (109) à des données (113) de la base de données (105) a été affichée.

5. Procédé selon l'une des revendications 1 à 4, **caractérisé en ce que** pendant l'affichage de la partie (110) des données transmises avec la liaison (109) à des données (113) de la base de données (105) les données restantes (113) sélectionnées selon la liaison (109) sont transmises de manière continue de la base de données (105) au terminal mobile (106) et affichées de manière continue par moyen du terminal mobile (106).

6. Procédé selon l'une des revendications 1 à 5, **caractérisé en ce que** la partie (110) des données transmises avec la liaison (109) à des données (113) de la base de données (105) est tamponnée par moyen du terminal mobile (106) dans au moins une mémoire prévue pour cela.

7. Procédé selon l'une des revendications 1 à 6, **caractérisé en ce que** les données restantes (113) sélectionnées selon la liaison (109) et transmises de manière continue de la base de données (105) au terminal mobile (106) sont tamponnées dans au moins une mémoire.

8. Procédé selon la revendication 6 ou la revendication 7, **caractérisé en ce que** les données (110, 113) tamponnées dans la mémoire sont affichées.

9. Procédé selon l'une des revendications 6 à 8, **caractérisé par** une taille réglable de la mémoire tampon.

10. Procédé selon l'une des revendications 6 à 9, **caractérisé par** une taille de la mémoire tampon, laquelle taille peut être adaptée aux données à transmettre (110, 113) et/ou à la quantité de données à transmettre.

11. Procédé selon la revendication 10, **caractérisé par** une adaptation automatique de la taille de la mémoire tampon.

12. Procédé selon l'une des revendications 1 à 11, **caractérisé en ce que** les données (110, 113) sont affichées acoustiquement et/ou optiquement par moyen du terminal mobile (106).

13. Procédé selon l'une des revendications 1 à 12, **caractérisé en ce que** des grandes quantités de données audio et/ou vidéo sont transmises et affichées de manière continue par moyen du terminal mobile (106) (diffusion audio et/ou vidéo).

14. Procédé selon l'une des revendications 1 à 13, **caractérisé en ce que** les données (110, 113) sont des données des contenus contrôlés par les événements.

15. Procédé selon l'une des revendications 1 à 14, **caractérisé en ce que** le service du réseau radio mobile (101) est un service de message multimédia (MMS).

16. Procédé selon l'une des revendications 1 à 15, **caractérisé en ce que** la base de données (105) est fournie par un serveur de diffusion.

17. Procédé selon la revendication 16, **caractérisé en ce que** la station de commande de service de message multimédia (MMS server) est directement, ou via un réseau fixe, connecté à un réseau radio mobile (101) ou est intégré dans celui-ci.

18. Procédé selon l'une des revendications 1 à 17, **caractérisé en ce que** le terminal mobile (106) est un téléphone mobile, qui est capable d'exécuter un service de message multimédia (capable de MMS).

19. Procédé selon l'une des revendications 1 à 18, **caractérisé en ce que** le terminal mobile (106) est un téléphone mobile, qui est capable d'exécuter une diffusion continue.

20. Procédé selon l'une des revendications 1 à 19, **caractérisé en ce que** les données (110, 113) pouvant être affichées peuvent être mémorisées par moyen du terminal mobile (106).
